**Europäisches Patentamt**

**European Patent Office**

**Office européen des brevets**

(19)

(11) Publication number : **0 405 404 B1**

(12)

# EUROPEAN PATENT SPECIFICATION

(45) Date of publication of patent specification :
**22.12.93 Bulletin 93/51**

(51) Int. Cl.⁵ : **B01J 20/20, B01D 53/34**

(21) Application number : **90112047.7**

(22) Date of filing : **25.06.90**

(54) Chromium-free impregnated activated carbon for adsorption of toxic gases and/or vapors.

(30) Priority : **23.06.89 US 371430**
**15.06.90 US 537311**

(43) Date of publication of application :
**02.01.91 Bulletin 91/01**

(45) Publication of the grant of the patent :
**22.12.93 Bulletin 93/51**

(84) Designated Contracting States :
**AT BE CH DE DK ES FR GB IT LI NL SE**

(56) References cited :
**DE-A- 3 805 407**
**DE-C- 973 481**
**FR-A- 2 532 188**
**US-A- 1 519 470**
**US-A- 2 920 051**
**US-A- 4 801 311**
**US-A- 4 802 898**

(73) Proprietor : **CALGON CARBON
CORPORATION
500 Calgon Carbon Drive
Pittsburgh Pennsylvania 15205 (US)**

(72) Inventor : **Doughty, David Templeton
364 Meade Drive
Coraopolis, PA 15108 (US)**
Inventor : **Groose, James Edward
1455 Madison Avenue
At. Charles, IL 60174 (US)**

(74) Representative : **Patentanwälte Grünecker,
Kinkeldey, Stockmair & Partner
Maximilianstrasse 58
D-80538 München (DE)**

# Description

The present invention relates to impregnated activated carbon adsorbents for removal of toxic materials in respiration and collective filter applications and, in particular, to a chromium free impregnated carbon adsorbent for the removal of toxic gases and/or vapors. as well as to a process for preparing same.

Activated carbon has long been used to remove toxic gases and vapors from a stream of gas. These activated carbons are useful in respirators, collective filters and other applications, and often involved the use of special impregnants to remove gases that would not otherwise be removed through the use of unimpregnated activated carbons. These impregnated activated carbon adsorbents for removal of toxic gases and/or vapors have been known and used for many years. The prior art formulations contain copper, chromium and silver impregnated on an activated carbon. These adsorbents are effective in removing a large number of toxic materials. Appendix I sets forth a summary of prior art involving these formulations.

Generally, it is known that removal of cyanogen chloride, hydrogen cyanide and cyanogen require the presence of chromium and copper on the activated carbon for effective removal. Copper and silver have been shown to be effective in the removal of arsine and phosphine. Chlorine, hydrogen chloride, hydrogen fluoride and hydrogen sulfide are also removed by the presence of copper impregnates on activated carbon.

In addition to a number of other inorganic materials which have been impregnated on activated carbon, various organic impregnants have been found useful in military applications for the removal of cyanogen chloride. Examples of these include triethylenediamine (TEDA) and pyridine-4-carboxylic acid. Tartaric acid has also been found to be used with other materials in various applications.

A search of the prior art has uncovered patents which disclose a variety of agents impregnated in activated carbon to remove toxic vapors from a gas stream.

GB-A-2 187 725 discloses activated charcoal impregnated with transition metal salts preferably consisting of cobalt, nickel or zinc acetate.

US-A-3,355,317 to Keith et al. discloses the use of the oxides of cobalt, copper, zinc, iron and molybdenum on activated carbon to remove hydrogen cyanide from tobacco smoke.

US-A-2 920 050 and 2,920,051 both to Blacet et al. describe the preparation of whetlerite type filters which include copper, silver and molybdenum impregnants.

US-A-4 801 311 to Tolles discloses a whetlerite type activated carbon filter material impregnated with copper, silver, and molybdenum and/or vanadium salts together with triethylenediamine.

US-A-4 802 898 to Tolles discloses a whetlerite type activated carbon filter material impregnated with triethylenediamine, and optionally with copper and silver.

US-A-4 531 953 to Groose discloses an activated carbon impregnated with copper, silver and/or chromium mixtures and triethylenediamine.

DE-A-3 805 407 discloses an activated carbon impregnated with 0.5 to 10 wt% of vanadium, 0.5 to 10 wt% of copper and/or 0.5 to 10 wt% of zinc for removal of acidic gases.

FR-A-2 532 188 relates to an activated carbon filter for the purification of air containing eg. chlorine, ammonia and hydrogen sulfide, said filter being impregnated with copper, zinc and silver.

US-A-1 519 470 discloses an activated carbon impregnated with siver and copper to increase the catalytic action against oxidizable gases, such as arsine, or with zinc, copper and silver against acid gases, such as phosgene.

In addition to the foregoing prior art patents, other references disclose that activated carbon impregnated with triethylenediamine (TEDA) has been found to be particularly effective for gas masks for removing cyanogen chloride. References also disclose that activated carbon may be impregnated with copper and/or silver for removal of additional toxic gases or vapors often required for military protective mask applications.

Other references, including the 1946 NDRC report (Appendix I, Reference 10) by Grabenstetter et al. describe the use of copper, silver, chromium and molybdenum or vanadium impregnants on activated carbon to remove hydrogen cyanide and cyanogen chloride. Other organic base impregnations of charcoal are disclosed, including the use of amines such as triethylene diamine and others are also found in prior art.

The use of impregnated activated carbon adsorbents in respirators and collective filters, either for military or industrial applications, require special considerations regarding the toxicity and carcinogenicity of the impregnants to the user. These considerations eliminate a large number of prior art potential impregnants from use in respirator and collective filter applications. This is especially the case with hexavalent chromium, which involves potential health hazards.

Accordingly, it is the object of the present invention to provide an activated carbon absorbent according to claim 1 for use in both military and industrial respirator and collective filter applications that has the advantages of being chromium-free while remaining effective in removing toxic gases and/or vapors.

Preferred embodiments of the chromium-free activated carbon adsorbent of the present invention are set out in the dependent claims, for example, an activated carbon adsorbent impregnated so as to result in a composition containing from about 6 to 8% copper, 6 to 8% zinc and optionally 0.03 to 0.05% silver and/or 2 to 4% triethylenediamine. Up to 10% tartaric acid may also be added during preparation of this composition. The adsorbent of this embodiment of the present invention has been found to be effective for removing gases and/or vapors including chlorine, hydrogen chloride, hydrogen cyanide, cyanogen chloride, sulfur dioxide, hydrogen sulfide, formaldehyde and others, which are hereinafter referred to as "toxic gases and/or vapors".

The present invention further provides a process for preparing the chromium-free activated carbon adsorbent of the present invention, wherein said activated carbon is impregnated at least once with solutions containing copper and zinc and optionally silver, molybdenum and organic acid, dried after each impregnation and thereafter impregnated with said triethylenediamine.

The present invention is useful in respirator and collective filter applications, and meets both military and industrial toxic gas and/or vapor performance criteria. The formulation of the impregnants can be varied to adjust the performance characteristics to achieve the desired enhanced removal of specific toxic gases and/or vapors and extended shelf life.

General Preparation Conditions:

Samples were impregnated by the "addition- titration" method where solution is slowly added nearly to the point that the activated carbon appears wet. In this method, the pore volume is almost filled with solution. Other methods of impregnation can also be utilized. One, two or more impregnation "cycles" can be used; sample metal loadings are calculated based on preparation conditions, not actual analysis. Samples are then checked by nitric acid extraction and atomic absorption analysis. The calculated loadings are typically accurate to about +/-.5% weight. Samples tested herein have been dried in a forced air draft convection oven on shallow trays. Other methods of drying the activated carbon (including at elevated temperatures in $N_2$) can also be employed, again according to the desired characteristics of the activated carbon. The drying temperatures used vary, and include the methods as provided in the specific data below.

ASZ-TEDA Composition

Preparation:

The samples were prepared in batches of approximately 1Kg and dried in a laboratory oven. The composition of a typical impregnation solution used is shown in Table I. As used herein, ASZ refers to activated carbon impregnated with copper, zinc and optionally silver. ASZ-TEDA refers to the same formulation additionally impregnated with TEDA as set forth in Table I.

## TABLE I

### Sample Impregnation Solution for Preparation of ASZ

| Material | Quantity* |
|---|---|
| 250 ml | $H_2O$ |
| 100 g | $(NH_4)_2CO_3$ |
| 250 ml | $NH_4OH$ (conc.) |
| 72.0 g | $ZnCO_3$ |
| 68.2 g | $CuCO_3Cu(OH)_2$ (Basic Copper Carbonate) |
| 0.5 g | $AgNO_3$ |
| 50 g | Tartaric Acid (Optional) |

* Quantities are based on 500 g coal-based activated carbon, 12 x 30 mesh.

Two impregnation cycles were generally used. The first impregnation solution was added to dry coal-based activated carbon in approximately 25 ml aliquots at the ratio of 70 ml per 100 g activated carbon. The activated carbon was shaken during addition to avoid pooling of the solution. The partially impregnated activated carbon was then dried in thin beds in a forced air convection oven for 30 min. at 100°C, and 30 min. at 130°C. After cooling, the activated carbon was reimpregnated with approximately 55 ml solution per 100 g activated carbon in a similar manner. The drying profile used for the twice impregnated product was: 100°C, 30 min; 130°C, 30 min; 160°C, 45 min; 180°C, 45 min. The cooled activated carbon was impregnated with TEDA according to the method of US-A-4 531 953. Addition of tartaric acid to the impregnation solution gives additional improvement in the HCN performance of the activated carbon.

Testing:

The results of hydrogen cyanide, cyanogen chloride and aging tests of a test sample of ASZ-TEDA and a production sample of ASC (prior art chromium impregnated activated carbon) are shown in Table II.

## TABLE II

Hydrogen Cyanide and Cyanogen Chloride Testing Of ASC and ASZ-TEDA Samples

| | Hydrogen Cyanide Life (min) | | | | Cyanogen Chloride Life (min) | | | |
|---|---|---|---|---|---|---|---|---|
| SAMPLE[1] | AR/6 | AR/50 | 50/50 | AGED[2] 80/50 | AR/20 | 50/50 | 80/80 | AGED[2] 80/80 |
| ASZ/4% TEDA(INVENTION) | 32 | 30 | 33 | 30 | 32 | 57 | 58 | 57 |
| ASC(COMPARISON) | 33 | 33 | 39 | 36 | 75 | 94 | 69 | 46 |

1    Test conditions are referred to as (Precondition Humidity)/(Test Humidity). "AR" means sample tested as received.

2    "Aged" means sample maintained for 7 days at 45°C, 85% relative humidity.

The hydrogen cyanide test results in Table II indicate that performance is relatively insensitive to humidity. The test lives are also comparable to the ASC sample used as a reference. The cyanogen chloride performance of ASZ-TEDA is quite dependent on humidity. Test life is relatively low under dry conditions, and increases as moisture is added to the system during preconditioning. This behavior is different than that of ASC. ASC has better dry performance, reaches peak lifetime at 50/50 conditions, and decreases as more water is added. At 80/80 conditions, cyanogen chloride life of ASZ-TEDA is only slightly lower than ASC.

The most striking improvement in performance between ASZ-TEDA over ABC is that cyanogen chloride performance of ASZ-TEDA does not deteriorate with aging at 45°C and 85% relative humidity. The ASC reference lost 33% of its effectiveness under these same conditions.

The results of physical property tests and chemical analysis of the product are shown in Table III.

## TABLE III

### Physical Properties of an ASZ-TEDA Sample

|  | Predicted | Analyzed |
|---|---|---|
| Cu | 6.0% | 6.4% |
| Zn | 6.0 | 5.5 |
| Ag | 0.05 | 0.06 |
| TEDA | 4.0 | ND |
| Moisture | ND | 2.52% |
| Apparent Density | ND | .590 g/ml |

*ND means "not determined."

Tartaric Acid:

As show in table IV, incorporation of up to 10% tartaric acid In the solution used to impregnate the product resulted in noticeable improvement in the hydrogen cyanide life of the adsorbent of the present invention.

## TABLE IV

### Effect of Tartaric Acid on Hydrogen Cyanide Performance of Cu-Zn Samples

| Cu(%) | Zn(%) | Tartaric Acid (%)* | TEDA(%) | Final Drying Temp(°C) | Hydrogen Cyanide Life (min) | Cyanogen Chloride Life (min) |
|---|---|---|---|---|---|---|
| 8 | 6 | 0 | 4 | 180 | 23 | 52 |
| 8 | 6 | 5 | 4 | 180 | 27 | ND |
| 8 | 6 | 10 | 4 | 180 | 32 | 56 |
| 8 | 6 | 0 | 4 | 220 | 22 | 51 |
| 8 | 6 | 10 | 4 | 220 | 30 | 56 |
| 6 | 6 | 0 | 4 | 180 | 26 | 60 |
| 6 | 6 | 10 | 4 | 180 | 29 | 56 |
| 6 | 6 | 0 | 2 | 180 | 24 | 46 |
| 6 | 6 | 5 | 2 | 180 | 26 | 42 |

* During processing and drying, tartaric acid decomposes; as such, its presence may or may not be detectable in the final product.

The improvements that result from the addition of tartaric acid are most noticeable at higher metal loadings for adsorbents impregnated with 8% Cu and 6% Zn. For these adsorbents, hydrogen cyanide life increased from 21-23 minutes to 28-32 minutes. (Table IV). The improvement in performance for adsorbents containing 6% Cu and 6% Zn was not as marked; in this case, performance improved from 24-26 minutes to 28 minutes. At both the 6% and 8% Cu levels, little effect on cyanogen chloride life was found. Performance improvements with less than 10% tartaric acid were less dramatic.

Adsorbents of the present invention were prepared using other organic acids to improve performance. However, as shown in Table V, only maleic acid indicated any benefit for hydrogen cyanide performance

## TABLE V

### Test Lives of Adsorbents with Organic Acids

ASZ samples: 8% Cu, 6% Zn, 0.05% Ag, 4% TEDA and 10% of indicated acid, if added.

| Acid | Hydrogen Cyanide Life (min) | Cyanogen Chloride Life (min) |
|---|---|---|
| Salicylic | 21 | 29 |
| Acetic | 24 | 33 |
| Maleic | 30 | 40 |
| Potassium Hydrogen Phthalic | 20 | 38 |
| (Without Acid) | 23 | 52 |

With respect to maleic acid, the degree of provement was similar to that found for tartaric acid. Cyanogen chloride performance of the adsorbent prepared with maleic acid was lower than for adsorbent containing tartaric acid.

To understand the response of hydrogen cyanide and cyanogen chloride to variations in the compositional impregnant regions of 0-12% Cu, 0-12% Zn, and 0-6% TEDA, tests were performed in these ranges. The results of these tests are set forth in Table VI.

TABLE VI

Copper, Zinc and TEDA Formulation Data[1]

| | Cu(%) | Zn(%) | TEDA(%) | Life (min.) Cyanogen Chloride[2] | Life (min.) Hydrogen Cyanide[3] |
|---|---|---|---|---|---|
| (inv.) | 4.00 | 8.00 | 1.500 | 50.00 | 16.00 |
| (comp.) | 0.00 | 8.00 | 4.500 | 62.50 | 18.50 |
| " | 12.00 | 0.00 | 3.000 | 50.50 | 18.50 |
| (inv.) | 4.00 | 8.00 | 3.000 | 56.50 | 16.50 |
| (comp.) | 8.00 | 0.00 | 1.500 | 20.00 | 16.00 |
| " | 0.00 | 12.00 | 1.500 | 33.50 | 16.50 |
| " | 0.00 | 8.00 | 3.000 | 48.50 | 24.00 |

(Table continued on next page)

1.  Silver was not included in these formulations, as it has no effect on the performance of the samples tested on cyanogen chloride and hydrogen cyanide life.

2.  Error limits for Cyanogen Chloride life are +/- 5 minutes.

3.  Error limits for Hydrogen Cyanide life are +/- 3 minutes.

(Table continued from previous page)

| | Cu(%) | Zn(%) | TEDA(%) | Life (min) Cyanogen Chloride | Life (min) Hydrogen Cyanide |
|---|---|---|---|---|---|
| (comp.) | 0.00 | 8.00 | 1.500 | 45.50 | 16.50 |
| " | 8.00 | 0.00 | 3.000 | 45.00 | 19.50 |
| " | 0.00 | 12.00 | 3.000 | 50.00 | 22.00 |
| " | 12.00 | 0.00 | 1.500 | 35.00 | 17.00 |
| " | 8.00 | 0.00 | 4.500 | 57.80 | 17.50 |
| " | 0.00 | 11.25 | 3.800 | 47.00 | 15.50 |
| (inv.) | 4.00 | 8.00 | 3.000 | 50.00 | 19.50 |
| (comp.) | 0.0 | 4.00 | 0.000 | 3.30 | 12.00 |
| (inv.) | 4.00 | 4.00 | 3.000 | 52.50 | 19.50 |
| (comp.) | 0.00 | 0.00 | 3.000 | 14.50 | 2.00 |
| " | 4.00 | 0.00 | 0.000 | 4.60 | 11.50 |
| " | 8.00 | 0.00 | 0.000 | 0.40 | 13.60 |
| " | 0.00 | 4.00 | 0.000 | 3.00 | 14.50 |
| " | 4.00 | 4.00 | 0.000 | 0.70 | 22.70 |
| " | 0.00 | 0.00 | 3.000 | 20.70 | 2.60 |
| " | 4.00 | 0.00 | 3.000 | 36.20 | ND |
| " | 8.00 | 0.00 | 3.000 | 51.10 | 12.20 |
| " | 0.00 | 8.00 | 3.000 | 39.80 | 17.50 |
| " | 0.00 | 0.00 | 1.500 | 17.40 | ND |
| " | 0.00 | 0.00 | 6.000 | 23.90 | ND |
| " | 9.70 | 0.00 | 0.000 | 0.00 | 15.50 |
| " | 9.70 | 0.00 | 3.000 | 43.60 | ND |
| (inv.) | 4.00 | 4.00 | 3.000 | 46.50 | 20.40 |
| " | 4.00 | 8.00 | 3.000 | 56.00 | 16.00 |
| " | 4.00 | 6.00 | 4.000 | 68.00 | 24.00 |
| " | 5.00 | 7.00 | 3.000 | 52.00 | 22.00 |
| " | 3.00 | 5.00 | 3.000 | 52.00 | 17.00 |
| " | 3.00 | 7.00 | 5.000 | 60.00 | 16.00 |
| " | 4.00 | 4.00 | 3.000 | 60.00 | 18.00 |
| " | 4.00 | 6.00 | 4.000 | 61.00 | 21.00 |
| (comp.) | 4.00 | 0.00 | 1.500 | ND | 7.00 |
| " | 4.00 | 0.00 | 3.000 | 38.00 | 12.00 |
| (inv.) | 8.00 | 4.00 | 3.000 | 71.00 | 28.00 |
| (comp.) | 12.00 | 0.00 | 1.500 | 37.00 | 18.00 |
| " | 12.00 | 0.00 | 3.000 | 56.00 | 18.00 |
| (inv.) | 5.00 | 5.00 | 5.000 | ND | 25.00 |
| " | 4.00 | 6.00 | 4.000 | 70.00 | 25.00 |
| (comp.) | 0.00 | 0.00 | 3.000 | 14.00 | 4.00 |
| " | 0.00 | 0.00 | 6.000 | 20.00 | 6.00 |
| (inv.) | 8.00 | 8.00 | 3.000 | 65.00 | 26.00 |
| (comp.) | 0.00 | 0.00 | 3.000 | ND | 10.00 |
| " | 0.00 | 10.00 | 4.000 | 64.00 | 20.00 |
| " | 6.00 | 0.00 | 2.250 | 38.00 | 18.00 |
| (inv.) | 5.00 | 5.00 | 3.000 | 59.00 | 26.00 |

It has been found that the major contributor to cyanogen chloride life is TEDA in conjunction with copper and zinc. Interactions between copper and TEDA and zinc and TEDA are important, and contribute significantly in improving performance at higher metal levels.

Hydrogen cyanide protection is provided by copper and zinc, with zinc being more effective at lower metal levels.

Carbons impregnated with comparable total metal percentages that include Zn perform better than similar carbon formulations that do not include Zn. As shown in Table VI (A), at low TEDA impregnation levels (-<3.5%), samples with Zn perform better than samples without Zn. (Table VI(A) compares a 6% Zn/ 6% Cu carbon sample with a 12% Cu carbon sample.) As such, samples that include Zn as an impregnate can provide the potential benefit of permitting the use of reduced amounts of TEDA, without sacrificing CK performance at these lower TEDA levels. Lower TEDA levels that can be employed in conjunction with formulations that include Zn lead to improved physical adsorption capacities of the carbons of the present invention.

## TABLE VI(A)

### FORMULATION CK LIFE - 12% METAL IMPREGNATIONS

**CK LIFE (min)**

**% TEDA (wt/wt)**

Additional impregnates to Cu-Zn-Ag-TEDA carbon formulations of the present invention can result in improved performance in breakthrough tests, particularly for applications under conditions in which the impregnated activated carbons are subjected to high humidity/high moisture content conditions. These formulations can also increase the shelf life and improve the performance of aged impregnated carbons under prolonged high-humidity conditions.

Tests of activated carbons impregnated with 6% Cu, 6% Zn, 0.05% Ag, 3% TEDA have disclosed that these carbons may in some instances perform unacceptably. It is known that under certain conditions, some Cu compounds alone or impregnated on activated carbon, can react in the presence of HCN to form $(CN)_2$ as a by-product. Under high humidity/high carbon moisture content conditions, premature cyanogen $((CN)_2)$ gas breakthrough during HCN challenge may occur. Subsequent tests using improved analytical tools capable of independently detecting and monitoring both HCN and $(CN)_2$ breakthrough indicate that premature breakthrough can occur for Cu/Zn formulations under high humidity/moisture content conditions.

Further, when Cu-Zn-Ag-TEDA impregnated carbons are exposed to high humidity for prolonged periods (aged), $(CN)_2$ will equivalently result as an undesired by-product, or otherwise be formed during the course of the HCN challenge. The cyanogen present, regardless of the source, may be evident in sufficient amounts so as to pose a potential hazard.

The possible effect of some Cu compounds as undesired reactants in HCN challenge situations suggests another benefit to formulations of the impregnated carbons of the present invention. Testing has shown that impregnations with Zn compounds in the absence of copper do not have the undesirable property of converting HCN to $(CN)_2$. See Table VI(B). This, therefore, provides a benefit of partial replacement of Cu with Zn in the formulation, in that the formation of $(CN)_2$ can be substantially reduced.

## TABLE VI(B)

### HCN TEST LIVES

| Sample[1] | | AC Life (min.) AR/50 | | AC Life (min.) 80/50 | |
|---|---|---|---|---|---|
| | | $t_b{}^2$ | Gas | $t_b{}^2$ | Gas |
| (inv.) | 6% Cu, 6% Zn | 21 | $(CN)_2$ | 16 | $(CN)_2$ |
| (inv.) | 2% Cu, 10% Zn | 23 | (HCN) | 26 | (HCN & $(CN)_2$) |
| (comp.) | 12% Zn | 16 | (HCN) | 24 | (HCN) |

[1] Samples additionally contain 3% TEDA.

[2] Breakthrough time $(t_b)$ corresponds to the appearance of HCN at 4.0 $mg/m^3$ or $(CN)_2$ at 8.0 $mg/m^3$. The gas triggering termination of the test is listed.

It has been found that certain supplemental impregnates, such as molybdenum, improve the performance of the Cu/Zn-based carbon formulations of the present invention under high carbon moisture content conditions. In particular, molybdenum (Mo), impregnated (loaded) onto the carbon suppresses $(CN)_2$ gas breakthrough during the HCN challenge. The addition of even small amounts of Mo to the Cu-Zn-Ag-TEDA formulation appears to suppress the unacceptable breakthrough effects relating to $(CN)_2$ gas during HCN challenge.

Molybdenum addition also provides the supplemental benefit of providing protection against direct challenge of $(CN)_2$. This benefit is not present for either pure copper formulations, pure Zn formulations, or combinations of Cu and Zn.

Samples prepared to include molybdenum were prepared by procedures as previously described for the Cu/Zn formulations, with the exception that ammonium dimolybdate, or similar molybdenum-containing compound is added to the impregnation solution. Drying and TEDA impregnation procedure as outlined for the non-molybdenum formulations were followed.

Tests of those samples were conducted in which HCN and $(CN)_2$ breakthroughs were independently monitored and evaluated under high humidity conditions. Table VI(C) shows humid (80/50) and aged carbons (with and without Mo) being independently monitored and evaluated for HCN and $(CN)_2$ breakthrough lives. This table indicates the earlier of the two breakthrough times. The high humidity/high moisture content samples containing molybdenum perform as well as or better than dry (AR/50) samples. In contrast, similar carbons tested without Mo show less desirable performance under high humidity conditions, and even more undesirable performance once the high humidity content carbons are aged.

## TABLE VI(C)

### HCN TEST LIVES

| | | AC Life (min) AR/50 | | AC Life (min) 80/50 | | AC Life (min) Aged | |
|---|---|---|---|---|---|---|---|
| | | $t_b{}^1$ | Gas | $t_b{}^1$ | Gas | $t_b{}^1$ | Gas |
| (comp.) | 6% Cu/ 6% Zn | 21 | $(CN)_2$ | 16 | $(CN)_2$ | 6 | $(CN)_2$ |
| | 5% Cu/ 5% Zn/ 2% Mo | 22 | $(CN)_2$ | 28 | HCN | 25 | HCN + $(CN)_2$ |

1 Breakthrough time ($t_b$) corresponds to the appearance of
HCN at 4.0 mg/m$^3$ or (CN)$_2$ at 8.0 mg/m$^3$. The gas
triggering termination of the test is listed.

Additional tests in which breakthrough of both HCN and (CN)$_2$ were independently monitored and reported (see Table VI(D)) demonstrate that the 2% Mo, 5% Cu, 5% Zn, 0.05% Ag and 3% TEDA (total 12.05% metal) carbon formulation perform better than the 6% Cu, 6% Zn, .05% Ag, 3% TEDA (12.05% metal) formulations that do not contain Mo.

## TABLE VI(D)

### HCN TEST LIVES

| Sample[2] | HCN Test Life (Min.) AR/50[1] | | HCN Test Life (Min.) 80/50[1] | |
|---|---|---|---|---|
| | $t_b$[3] (HCN) | $t_b$ ((CN)$_2$) | $t_b$ (HCN) | $t_b$ ((CN)$_2$) |
| 6% Cu, 6% Zn | 22 | 21 | 26 | 14 |
| 5% Cu, 5% Zn, 2% Mo | 23 | 28 | 28 | 30 |

[1] Test relative humidity condition is specified as: pretreatment humidity/test humidity. "AR" means tested as received.

[2] Samples additionally contain 0.05% Ag and 3% TEDA.

[3] Breakthrough time, in minutes, for the indicated gas in response to an HCN challenge.

Table VI(E) demonstrates the improved performance of Cu/Zn formulations that include molybdenum with respect to high humidity/high moisture content conditions after exposure to aging conditions.

## TABLE VI(E)

### AGED[1] HCN TEST LIVES

| Sample[2] | HCN Test Life (minutes) | |
|---|---|---|
| | $t_b$[3] (HCN) | $t_b$[3] ((CN)$_2$) |
| 6% Cu, 6% Zn | 28 | 10 |
| 5% Cu, 5% Zn, 2% Mo | 29 | 28 |

[1] Samples exposed to an air stream for 2 weeks at 85% RH and 90°F (32°c).

[2] Samples additionally contain 0.05% Ag and 3% TEDA.

[3] Breakthrough time, in minutes, for the indicated gas in response to an HCN challenge.

Specific Application AZ Compositions

Preparation and Testing:

As used herein, AZ refers to copper and zinc impregnated activated carbon formulations prepared in the same manner as the ASZ-TEDA (Cu-Zn-Ag-TEDA) composition described in Table I, but without the addition of Ag or TEDA. AZ samples were also prepared in the same manner as the aforementioned ASZ-TEDA (Cu-Zn-Ag-TEDA) composition as described in Table I, but again without the addition of Ag or TEDA, which are often not required for non-military toxic gas and/or vapor applications.

The AZ embodiments (comparison) are comprised of an activated carbon adsorbent impregnated with (depending on the particular characteristics desired) compositions resulting in a metals content of up to 14% copper and 2% to 16% zinc in the impregnated activated carbon. The formulations of the impregnants are varied, and demonstrate the that the performance characteristics of the chromium-free compositions can be tailored to achieve enhanced removal of specific toxic gases.

Table VII sets forth the results of sample gas life challenges of Chlorine, Hydrogen Chlorine, Sulfur Dioxide, Formaldehyde and Hydrogen Sulfide for a typical AZ formulation.

## TABLE VII

### Sample Gas Life Challenge Results for AZ Activated Carbons

| | NIOSH $Cl_2$ (min)* | NIOSH HCl (min)* | NIOSH $SO_2$ (min)* | Formaldehyde** (100 ppm/min) | Calgon $H_2S$ Capacity (wt. %) |
|---|---|---|---|---|---|
| ASC (comp.) | > 120 | > 120 | 117 | > 120, > 120 | 7.4 |
| AZ (5% Cu, 6% Zn) (comp.) | > 120 | > 120 | 102 | > 120, 79 | 8.0 |

\* NIOSH Test conditions are 32 L.P.M. per sample cartridge, 12 x 30 screen mesh size, 1 ppm breakthrough, 25°C, 50% humidity.

\*\* Two (2) test cycles were run.

Table VIII sets forth the results of tests on various AZ activated carbon formulations challenged with sulfur dioxide.

## TABLE VIII

### $SO_2$ Challenge Results for AZ Activated Carbons (comparison)

| Cu (wt %) | Zn (wt %) | $SO_2$ Life (min.) |
|---|---|---|
| 4 | 4 | 72 |
| 4 | 8 | 75 |
| 6 | 6 | 74 |
| 8 | 4 | 78 |
| 8 | 8 | 82 |
| 7 | 0 | 56 |

Conclusions:

Laboratory studies show that good performance is attained with the present invention in specialized compositions containing a mixture of up to 14% copper and 2% to 16 % zinc and up to 6% TEDA, copper and TEDA being mandatory components, as defined in the working of claim 1. Silver may also be added, depending on desired performance characteristics. Tartaric, maleic and/or other organic acids may also be incorporated into the preparation to improve performance.

The activated carbons of the present invention can be tailored according the described formulations to meet specific desired performance characteristics for any number of industrial, military and other needs.

## APPENDIX I

1. Zabor, J. W. Mechanism of chemical removal of gases. Chapter 7 in Military Problems with Aerosols and Nonpersistent Gases, Division 10 of National Defense Research Committee, pp. 150-168, 1946.

2. Vancheri, F. J., Milius, J. W. and Juhola, A. J. Feasibility studies for regeneratable charcoal filters. Department of the Army, Edgewood Arsenal, Maryland, Contract no. DAAA15-68-C-0693, 1970.

3. Sides, G. D., Spafford, R. B. and Howard, M. D. Literature review of thermal decomposition studies of the agents GB, VX, and HD. Proceedings of the 1984 Scientific Conference on Chemical Defense Research, June, pp. 347-353, 1985.

4. Ward, J. R. and Hovanec, J. W. On the mechanism of Sarin hydrolysis catalyzed by transition-metal ions. Proceedings of the 1984 Scientific Conference on Chemical Defense Research, June, pp. 29-33, 1985.

5. Epstein, J. and Rosenblatt, D. H. J. Am. Chem. Soc., 80: 3596, 1958.

6. Gustafsen, R. L. and Martell, A. G. J. Amer. Chem. Soc., 84: 2309, 1962.

7. Sharpe, A. G. The Chemistry of Cyano Complexes of the Transition Metals. Academic Press, 1976.

8. Cotton, F. A. and Wilkinson, G. Advanced Inorganic Chemistry, Wiley-Interscience, 4th ed., 1980, p.368.

9. Emmett, P. H., Pohl, H. A. and Kummer, J. T. Chemisorption of gases on charcoals and Type A Whetlerites. NDRC Report No. 10.4-29, 1943.

10. Grabenstetter, R. J. and Blacet, F. E. Impregnation of charcoal Chapter 4 in Military Problems with Aerosols and Nonpersistent Gases, Division 10 of National Defense Research Committee, pp. 40-87, 1946.

11. Jain, P. C. and Mukherji, A. K. A fundamental study of the mechanisms of deterioration of ASC Whetlerite. Final report, Contract No. DAAA15-69-C-0708, July, 1971.

12. Barnir, Z. and Aharoni, C. Adsorption of cyanogen chloride on impregnated active carbon. Carbon, 13: 363-366, 1975.

13. Muthu, M., Krishnamurthy, T. S. and Majumdar, S. K. An evaluation of impregnated respirator canister carbons for phosphine removal from air. Pestic. Sci., 5: 245-249, 1974.

14. Deitz, V. R., Blachly, C. H. and Poziomek, E. J. Reaction of CO and air mixtures with charcoals impregnated with ammonium salts of Cu II and Cr VI. Naval Research Laboratory and Edgewood Arsenal, Washington, D.C., 1976.

15. Deitz, V. R., Blachly, C. H., Poziomek, E. J. and Baker, J. A. Reaction of Whetlerites with mixtures of carbon monoxide and air. NRL Report No. 4754, Naval Research Labs, Washington, D.C. 20375, 1982.

16. Deitz, V. R. and Poziomek, E. J. Correlation of the oxidation of CO-air mixtures at 50 degrees C with CK performance of used Whetlerite. Proceedings of the 1984 Scientific Conference on Chemical Defense Research, June, pp. 407-413, 1985.

17. Meier, E. P., Luckan, S., and Poziomek, E, Reaction of carbon monoxide with impregnated carbons. Carbon, 11: 417-418, 1973.

18. Severino, F. and Laine, J. Effect of composition and pretreatments on the activity of copper-chromium-based catalysts for the oxidation of carbon monoxide. Ind. Eng. Chem. Prod. Res. Dev., 22: 396-401, 1983.

19. Liu, P. K. T. and Groose, J. E. Whetlerite Process, Products and Applications. Literature Review No. 13, Calgon Carbon Corporation, December 15, 1982.

20. Puhala, R. J. Effect of carbon granule size on the protective capacity of gas filters. Chemical Systems Laboratory, Aberdeen Proving Ground, Maryland, Technical Rept. July 77-December 1978, Project 1L162706A553, April, 1979.

21. Klotz, I. M. The adsorption wave. Chapter 8 in Military Problems with Aerosols and Nonpersistent Gases, Division 10 of National Defense Research Committee, pp. 169-182, 1946.

22. Emmett, P. R. Adsorption and pore size measurements on charcoals and Whetlerites. Chapter 6 in Military Problems with Aerosols and Nonpersistent Gases, Division 10 of National Defense Research Committee, pp. 97-149, 1946.

23. Deitz, V. R., Robinson, J. N. and Poziomek, E. J. Electron transmission microscopy of charcoals impregnated with ammonium salts of Cu(II) and Cr (VI). Carbon, 13: 181-187, 1975.

24. Mackey, R. A., Poziomek, E. J. and Barrett, R. P. Quantitative electron spin resonance studies of

chemical reactions of metal impregnated activated charcoal. ACS Symposium Series, Magn. Reson. Colloid Interface Sci., Symp., 34: 191-199, 1976.

25. Poziomek, E. J., Mackay, R. A. and Barrett, R. P. Electron spin resonance studies with copper/silver/ chromium impregnated charcoals. Carbon, 13: 259-262, 1975.

26. Kloubek, J. A study of porosity and impregnation of Whetlerites. Collection Czechoslovak Chem. Commun., 47: 2368-2379, 1982.

27. Kloubek, J. Investigation of impregnant deposition in active carbon. Carbon, 19: 303-308, 1981.

28. Szostak, R., Weiss, A. H. and Sacco, A.,J r. EDX analysis of Whetlerized charcoal microareas. Extended Abstracts, 16th Biennial Conference on Carbon, July 18-22, University of California, San Diego, California, pp. 373-374, 1983.

29. Pytlewski, L. L. Studies of ASC Whetlerite activity. Prepared for Edgewood Arsenal Contract DAAA-15-73-C-0263, 1st Quarterly Report (July-October 1972), January, 1974.

30. Andrews, D. M. Vapor phase impregnation of active carbons. Final Summary Report, Project No. DA-1-B-662706-A-095, Commonwealth Scientific Corp., 1970.

31. Baker, J. A. and Poziomek, E. J. Modification of the adsorptive properties of charcoal by treatments with pyridines. Carbon, 12: 45-50, 1974.

32. Baker, J. A. and Poziomek, E. J. Effect of amine treatments on the chemical reactivity of copper/ silver/chromium impregnated charcoals. Carbon, 13: 347-348, 1975.

33. Dolian, F. E. and Hormats, S. Sorbents and process for their preparation. U.S. Patent No. 2963441, December 6, 1960.

34. Groose, J. E. and Liu, P. K. T. Sublimation of amine compounds on activated carbon pore surfaces. U.S. Patent No. 4531953, July 30, 1985.

35. Maggs, F. A. P. and Smith, M. E. Enhancement of CK protection by use of TEDA impregnated charcoal. Chemical Defense Establishment Technical Paper No. 225, CDE, Porton Down, Salisbury, Wilts., 1977.

36. Keith, C. H., Norman, V. and Bates, W. W., Jr. Tobacco smoke filter. U.S. Patent No. 3251365, May 17, 1966.

37. Keith, C. M., II, Norman, V. and Bates, W. W., Jr. Process of impregnating adsorbent materials with metal oxides. U.S. Patent No. 3355317, November 28, 1967.

38. Keith, C. H., Norman, V. and Bates, W. W., Jr. Cigarette filter. U.S. Patent No. 3460543, August 12, 1969.

39. Zackay, V. F., Lloyd, W. G., Rowe, D. R., Trenary, J. M. and Swanson, G. T. Method for removing gaseous pollutants in highly dilute concentrations from air at room temperatures. U.S. Patent No. 4,474,739 October 2, 1984.

40. Cotton, F. A. and Wilkinson, G. Advanced Inorganic Chemistry, Wiley-Interscience, 4th ed., 1980, pp. 1302-1304.

41. NTP, Annual Report on Carcinogens. Published annually by National Toxicity Program.

42.   OSHA, OSHA Regulated Carcinogenic Compounds.   1910.1001-.1018.   1044.1045.

43.   IARC, IARC Monographs on the Evaluation of the Carcinogenic Risk of Chemicals to Man.   Geneva: World Health Organization, International Agency for Research on Cancer, Multivolume Work, Albany, New York.

44.   NIOSH, Registry of Toxic Effects of Chemical Substances, 1983 Supplement to the 1981-82 Edition.   Contract No. 210-81-8101, Tracor Jitco, Inc., October, 1984.

45.   ACGIH, Threshold Limit Values for Chemical Substances in the Work Environment Adopted by ACGIH with Intended Changes for 1985-86.   American Conference of Governmental Industrial Hygienists, 1985.

46.   Teller, A. J. Removing hydrogen sulfide from gases.   U.S. Patent No. 3935294, January 27, 1976.

47.   British American Tobacco Co., Ltd. Smoking product filtration, British Patent No. 1397678, June 18, 1975.

48.   Kiefer, J. E. Tobacco smoke filters.   U.S. Patent No. 3618619, November 9, 1971.

49.   Ihrig, A. M. and Williams, D. L. Article for the selective removal of hydrogen cyanide from tobacco smoke.   U.S. Patent No. 4091822, May 30, 1978.

50.   Rainer, N. B. and Hoelzel, C. B. Smoking article.   U.S. Patent No. 4022223, May 10, 1977.

51. Wiig, E. O., Scoville, H., Jr., Ball, F. J., McCarty, L. V. and Zimar, F. Preparation and properties of ASV Whetlerite. Progress Report, [OSRD No. 1912 (10/13/43)],

52. Wiig, E. O., Scoville, H., Jr., McCarty, L. V,, Morse, N. L., Zinac, F., Blacet, F. E. and Grabenstetter, R. J. Type ASM Whetlerite prepared in rotary drier laboratory scale. Progress Report, OSRD, July 2, 1943.

53. Pierce, W. C. and Skei, T. Surveillance of impregnated charcoal. Chapter 5 in Military Problems with Aerosols and Nonpersistent Gases, Division 10 of National Defense Research Committee, pp. 88-96, 1946.

54. Morrell, J. C. and Tobiasson, G. T. Production of a protective carbon. U.S. Patent No. 2523875, September 26, 1950.

55. VanDerSmissen, C. E. Activated charcoal and process for its production. Federal Republic of Germany Patent No. GB2010794A, December 23, 1977.

56. Tellis, C. Process for removing hydrogen cyanide from gaseous streams. U.S. Patent No. 4271133, June 2, 1981.

57. Martinek, J. and Brych, J. Impregnation of charcoal for sorbing hydrogen cyanide. Czechoslovakia Patent No. CS 14995, August 15, 1973.

58. Owens, W. F., Jr., Forest, P. and Woodard, B. G. Filter for tobacco smoke. U.S. Patent No. 3605759, September 20, 1971.

59. Kovach, J. L., Grimm, J. J. and Freeman, W. P. TEDA vs. quinuclidine: Evaluation of two tertiary amine impregnants for methyl iodide removal from flow air stream. 17th DOE Nuclear Air Cleaning Conference, pp. 652-663.

60. Kitani, S., Noro, T. and Kohara, T. Removal of methyl iodide by impregnated charcoals from flowing air under humid condition. J. Nuclear Sci. Technol., 9: 197-202, 1972.

61. Evans, A. G. Confinement of airborne radioactivity. Progress Report: Jan-Dec 1976, E.I. duPont de Nemours & Co., U. S. Energy R&D Administration, Contr. No. AT(07-2)-1, 1977.

62. Groose, J. E., Polinsky, C. K., Conlisk, J. R., Pinchback, C. M. and Jones, P. The effect of TEDA impregnation on the performance of ASC carbon. Proceedings of the 1985 Scientific Conference on Chemical Defense Research, Aberdeen Proving Grounds, Maryland, November 19-22, 1985.

63. Resing, H. A., Deitz, V. R. and Murday, J. S. Carbon-13 NMR analysis of charcoal adsorbents: Reaction of methyl iodide with the impregnant triethylenediamine. Extended Abstracts, 16th Biennial Conference on Carbon, July 18-22, University of California, San Diego, California, pp. 319-320, 1983.

64. Ross, M. M., Campana, J. E. and Dietz, V. R. Mass spectrometric characterization of desorbed species from weathered activated carbon. Carbon, 22: 98-99, 1984.

65. Ross, M. M., Kidwell, D. A. and Campana, J. E. Analysis of impregnated charcoals by desorption ionization mass spectrometry. Anal. Chem., 56: 2142-2145, 1984.

66. Berg, R., Gulbrandsen, A. H. and Neefjies, G. A. The influence of aging on the chemisorption capacity of impregnated catalysts. Rev. Port. Quim., 19: 378-384, 211977.

## Claims

1. A chromium-free activated carbon adsorbent impregnated with up to 14% copper, 2 to 16% zinc, and up to 6% triethylenediamine, the total amount of copper and zinc being 6 to 16% and said copper and triethylenediamine being mandatory components.

2. The chromium-free activated carbon adsorbent according to claim 1, further impregnated with up to 10% silver.

3. The chromium-free activated carbon adsorbent according to claims 1 or 2, wherein said copper is present in an amount of from 5 to 8% and said zinc is present in an amount of from 5 to 8%.

4. The chromium-free activated carbon adsorbent according to claims 1 or 2 wherein said copper is present in an amount of from 6 to 8%, said zinc is present in an amount of from 6 to 8%, said triethylenediamine is present in an amount of 2 to 4%, and said silver is present in an amount of 0.03 to 0.05%.

5. The chromium-free activated carbon adsorbent according to any of claims 1 to 4 impregnated with up to 8% molybdenum.

6. The chromium-free activated carbon adsorbent according to claim 5 wherein said molybdenum is present in an amount of 1 to 4%.

7. The chromium-free activated carbon adsorbent according to any of claims 1 to 6, further impregnated with up to 10% organic acid.

8. The chromium-free activated carbon adsorbent according to claim 7, wherein the organic acid is maleic acid or tartaric acid.

9. A process for preparing a chromium-free activated carbon adsorbent according to any of claims 1 to 8, wherein said activated carbon is impregnated at least once with solutions containing copper and zinc and optionally silver, molybdenum and organic acid, dried after each impregnation and thereafter impregnated with said triethylenediamine.

10. The process according to claim 9, wherein the activated carbon is dried by heating up to ignition temperature.

11. The use of a chromium-free activated carbon adsorbent according to any of claims 1 to 8 for removing toxic gases or vapours from a stream.

12. The use according to claim 11 wherein the toxic gases or vapours include chlorine, hydrogen chloride, hydrogen cyanide, cyanogen chloride, sulfur dioxide, hydrogen sulfide and formaldehyde.

13. A protective filter or respirator containing a chromium-free activated carbon adsorbent according to any of claims 1 to 8.

## Patentansprüche

1. Chromfreies Aktivkohleadsorptionsmittel, das mit bis zu 14% Kupfer, 2 bis 16% Zink und bis zu 6% Triethylendiamin imprägniert ist, wobei die Gesamtmenge Kupfer und Zink 6 bis 16% beträgt, und das Kupfer und Triethylendiamin zwingende Bestandteile sind.

2. Chromfreies Aktivkohleadsorptionsmittel nach Anspruch 1, das weiterhin mit bis zu 10% Silber imprägniert ist.

3. Chromfreies Aktivkohleadsorptionsmittel nach Anspruch 1 oder 2, wobei das Kupfer in einer Menge von 5 bis 8% und das Zink in einer Menge von 5 bis 8% anwesend sind.

4. Chromfreies Aktivkohleadsorptionsmittel nach Anspruch 1 oder 2, wobei das Kupfer in einer Menge von 6 bis 8%, das Zink in einer Menge von 6 bis 8%, das Triethylendiamin in einer Menge von 2 bis 4% und das Silber in einer Menge von 0,03 bis 0,05% anwesend sind.

5. Chromfreies Aktivkohleadsorptionsmittel nach einem der Ansprüche 1 bis 4, das mit bis zu 8% Molybdän imprägniert ist.

6. Chromfreies Aktivkohleadsorptionsmittel nach Anspruch 5, wobei das Molybdän in einer Menge von 1 bis 4% anwesend ist.

7. Chromfreies Aktivkohleadsorptionsmittel nach einem der Ansprüche 1 bis 6, das weiterhin mit bis zu 10% organischer Säure imprägniert ist.

8. Chromfreies Aktivkohleadsorptionsmittel nach Anspruch 7, wobei die organische Säure Maleinsäure oder Weinsäure ist.

9. Verfahren zum Herstellen eines chromfreien Aktivkohleadsorptionsmittels nach einem der Ansprüche 1 bis 8, wobei die Aktivkohle mindestens einmal mit Lösungen, enthaltend Kupfer und Zink und ggf. Silber, Molybdän und organische Säure, imprägniert ist, nach jeder Imprägnierung getrocknet wird und danach mit dem Triethylendiamin imprägniert wird.

10. Verfahren nach Anspruch 9, wobei die Aktivkohle durch Erwärmen bis zur Zündtemperatur getrocknet wird.

11. Verwendung eines chromfreien Aktivkohleadsorptionsmittels nach einem der Ansprüche 1 bis 8 zum Entfernen toxischer Gase und Dämpfe aus einem Strom.

12. Verwendung nach Anspruch 11, wobei die toxischen Gase oder Dämpfe Chlor, Chlorwasserstoff, Blausäure, Chlorcyan, Schwefeldioxid, Schwefelwasserstoff und Formaldehyd umfassen.

13. Schutzfilter oder Atemfilter, enthaltend ein chromfreies Aktivkohleadsorptionsmittel nach einem der Ansprüche 1 bis 8.

## Revendications

1. Un adsorbant en charbon activé exempt de chrome imprégné d'un maximum de 14 % de cuivre, de 2 à 16 % de zinc et d'un maximum de 6 % de diamine de triéthylène, le montant total de cuivre et de zinc étant de 6 à 16 %, et lesdits cuivre et diamine de triéthylène étant des composants obligatoires.

2. L'adsorbant en charbon activé exempt de chrome selon la revendication 1, imprégné en outre d'un maximum de 10 % d'argent.

3. L'adsorbant en charbon activé exempt de chrome selon les revendications 1 ou 2, dans lequel ledit cuivre est présent dans une proportion de 5 à 8 % et ledit zinc est présent dans une proportion de 5 à 8 %.

4. L'adsorbant en charbon activé exempt de chrome selon les revendications 1 ou 2, dans lequel ledit cuivre est présent dans une proportion de 6 à 8 %, ledit zinc est présent dans une proportion de 6 à 8 %, ladite diamine de triéthylène est présente dans une proportion de 2 à 4 %, et ledit argent est présent dans une proportion de 0,03 à 0,05 %.

5. L'adsorbant en charbon activé exempt de chrome selon l'une quelconque des revendications 1 à 4 imprégné d'un maximum de 8 % de molybdène.

6. L'adsorbant charbon activé exempt de chrome selon la revendication 5, dans lequel ledit molybdène est présent dans une proportion de 1 à 4 %.

7. L'adsorbant en charbon activé exempt de chrome selon l'une quelconque des revendications 1 à 6, imprégné en outre d'un maximum de 10 % d'acide organique.

8. L'adsorbant en charbon activé exempt de chrome selon la revendication 7, dans lequel l'acide organique est de l'acide maléique ou de l'acide tartrique.

9. Un procédé de préparation d'un adsorbant en charbon activé exempt de chrome selon l'une quelconque des revendications 1 à 8, selon lequel ledit charbon activé est imprégné au moins une fois de solutions contenant du cuivre et du zinc, et, facultativement, de l'argent, du molybdène et de l'acide organique, séché après chaque imprégnation, et imprégné ensuite de ladite diamine de triéthylène.

10. Le procédé selon la revendication 9, dans lequel le charbon activé est séché par chauffage jusqu'à la température d'inflammation.

11. L'utilisation d'un adsorbant en charbon activé exempt de chrome selon l'une quelconque des revendications 1 à 8 pour extraire des gaz ou vapeurs toxiques d'un cours d'eau.

12. L'utilisation selon la revendication 11, dans laquelle les gaz ou vapeurs toxiques comprennent du chlore, du chlorure d'hydrogène, du cyanure d'hydrogène, du chlorure cyanogène, de l'anhydride sulfureux, de l'hydrogène sulfuré et du formaldéhyde.

13. Un filtre ou masque protecteur contenant un adsorbant en charbon activé exempt de chrome selon l'une quelconque des revendications 1 à 8.